(19) Europäisches Patentamt

European Patent Office

Office européen des brevets

(11) **EP 0 695 045 B1**

(12) **EUROPÄISCHE PATENTSCHRIFT**

(45) Veröffentlichungstag und Bekanntmachung des Hinweises auf die Patenterteilung:
**13.11.2002   Patentblatt 2002/46**

(51) Int Cl.⁷: **H04B 3/21**, H04B 3/23

(21) Anmeldenummer: **95202043.6**

(22) Anmeldetag: **25.07.1995**

(54) **Echokompensator unter Verwendung von Kurzzeitspektralanalyse**

Echo canceller using short time spectral analysis

Annuleur d'écho utilisant une analyse de spectre de courte durée

(84) Benannte Vertragsstaaten:
**DE FR GB**

(30) Priorität: **30.07.1994  DE 4427124**

(43) Veröffentlichungstag der Anmeldung:
**31.01.1996   Patentblatt 1996/05**

(73) Patentinhaber:
• **Philips Corporate Intellectual Property GmbH**
**20099 Hamburg (DE)**
Benannte Vertragsstaaten:
**DE**
• **Koninklijke Philips Electronics N.V.**
**5621 BA Eindhoven (NL)**
Benannte Vertragsstaaten:
**FR GB**

(72) Erfinder:
• **Patrick, Peter, Dr.-Ing.**
**Röntgenstrasse 24, D-22335 Hamburg (DE)**
• **Rühl, Hans-Wilhelm, Dr.-Ing.**
**Röntgenstrasse 24, D-22335 Hamburg (DE)**
• **Dobler, Stefan, Dipl.-Ing.**
**Röntgenstrasse 24, D-22335 Hamburg (DE)**

(74) Vertreter: **Volmer, Georg, Dipl.-Ing. et al**
**Philips Corporate Intellectual Property GmbH,**
**Weisshausstrasse 2**
**52066 Aachen (DE)**

(56) Entgegenhaltungen:
**US-A- 4 956 838**

• **PATENT ABSTRACTS OF JAPAN vol. 010, no. 309 (E-447), 21.Oktober 1986 & JP-A-61 121625 (MATSUSHITA ELECTRIC IND CO LTD), 9.Juni 1986,**
• **IEEE TRANSACTIONS ON ACOUSTICS, SPEECH AND SIGNAL PROCESSING, NOV. 1987, USA, Bd. ASSP-35, Nr. 11, ISSN 0096-3518, Seiten 1570-1578, XP002016390 MARCOS S ET AL: "Tracking capability of the least mean square algorithm: application to an asynchronous echo canceller"**

**Beschreibung**

Die Erfindung betrifft eine Anordnung zur Kommunikation mit einem Teilnehmer.

Aus der US 4,914,692 ist eine Anordnung zur Kommunikation mit einem Teilnehmer bekannt, die über eine Schnittstelle an ein Fernsprechnetz gekoppelt ist. Über das Fernsprechnetz erfolgt die Kommunikation mit einem Teilnehmer. Die Anordnung enthält eine Sprachansageeinheit, eine Spracherkennungseinheit, einen Echokompensator und einen Computer zur Steuerung der Kommunikationsanordnung. Die Kommunikationsanordnung erkennt mittels der Spracherkennungseinheit Sprachsignale des Teilnehmers bei einem Anruf und generiert in Abhängigkeit von diesen Teilnehmersprachsignalen automatisch mit Hilfe der Sprachansageeinheit Sprachansagen (Sendesignale für den Teilnehmer), die über das Fernsprechnetz an den Teilnehmer übertragen werden. Dabei entstehen durch Reflexion auf dem Kommunikationsweg verursachte Echos der Sprachansagen, die sich den Teilnehmersprachsignalen überlagern. Die Störungen der Teilnehmersprachsignale durch die Echos der Sprachansagen werden mit Hilfe des Echokompensators verringert, der in einer vorgegebenen Zeitspanne zwischen dem Senden einer Sprachansage und einer Antwort des Teilnehmers eingestellt wird, so daß die Spracherkennungseinheit die Teilnehmersprachsignale nahezu störungsfrei identifizieren kann. Ohne Echokompensation ist eine korrekte Erkennung von Teilnehmersprachsignalen für die Fälle nicht sichergestellt, in denen gleichzeitig Teilnehmersprachsignale und Sprachansagen auftreten.

Aus der US 4,956,838 ist ein Echokompensator zur Beseitigung von Echos zwischen einer Leitung zum Empfang eines Eingangssignals und einer Leitung zum Senden eines Ausgangssignals bekannt. Der vorgeschlagene Echokompensator ist vorgesehen, um das Problem der Überlagerung durch spektrale Faltung zu beseitigen. Dazu sind Mittel vorgesehen, die aus einem bestimmten Frequenzteilbereich ein aus einem anderen Teilbereich hineingefaltetes Spektrum herausfiltern.

Der Erfindung liegt die Aufgabe zugrunde, die Kommunika tionsanordnung mit geringem technischen Aufwand zu ver bessern.

Die Aufgabe wird dadurch gelöst, daß die Anordnung

- Spektralanalysemittel zur Bildung von Kurzzeitspektralwerten von Empfangssignalen, die zeitweise von Echos von dem Teilnehmer übermittelten Sendesignalen überlagerte Teilnehmersprachsignale sind,
- Echokompensationsmittel zur Schätzung von Kurzzeitspektralwerten der Echos und zur Bildung von Differenzwerten zwischen den Kurzzeitspektralwerten der Empfangssignale und den geschätzten Kurzzeitspektralwerten der Echos und
- Spracherkennungsmittel zur Auswertung der Differenzwerte

enthält.

Mit Hilfe einer solchen Anordnung ist auch dann eine korrekte Erkennung der Teilnehmersprachsignale durch die Spracherkennungsmittel sichergestellt, wenn die Teilnehmersprachsignale und die Sendesignale für den Teilnehmer gleichzeitig auftreten (Vollduplex-Betrieb). Eine Anpassung der Einstellungen der Echokompensationsmittel an die Echos wird nur einmal für jeweils einen der Zeitabschnitte durchgeführt, in die die Sendesignale und die Empfangssignale zur Bildung von Kurzzeitspektralwerten eingeteilt werden. Der Rechenaufwand für die Kurzzeitspektralanalysen ist gegenüber dem Rechenaufwand für eine Filterung im Zeitbereich durch Verwendung einer FFT (Schnelle Fourier-Transformation) gering. Der auf diese Weise schon reduzierte Rechenaufwand gegenüber Realisierungen der Echokompensationsmittel im Zeitbereich, bei denen für jeden Abtastwert der Sende- und Empfangssignale eine Anpassung der Echokompensationsmittel durchgeführt wird, wird weiter dadurch verringert, daß sowohl die Echokompensation als auch die Spracherkennung im Spektralbereich durchgeführt werden, wodurch Rücktransformationen in den Zeitbereich überflüssig sind.

In einer Ausgestaltung der Erfindung sind die Echokompensationsmittel zur Bildung von Kurzzeitspektralwerten der Sendesignale und zur adaptiven Gewichtung dieser Kurzzeitspektralwerte zur Abschätzung der Echos vorgesehen, wobei zur adaptiven Gewichtung der Kurzzeitspektralwerte der Sendesignale insbesondere ein LMS-Algorithmus dient.

Auf diese Weise wird eine effektive Schätzung der Kurzzeitspektralwerte der Echos erreicht, die aus den Kurzzeitspektralwerten der Sendesignale abgeleitet werden. Die Gewichtung der Kurzzeitspektralwerte der Sendesignale wird mit Hilfe des LMS-Algorithmus ("Least Mean Square") so angepaßt, daß der störende Einfluß der Echos ausreichend schnell soweit verringert wird, daß eine korrekte Spracherkennung möglich wird.

Zur weiteren Ausgestaltung der Erfindung ist vorgesehen, daß Mittel zur Erzeugung der Sendesignale in die Anordnung integriert sind.

Die Anordnung kann bei dieser Ausgestaltung als eigenständige Einheit realisiert werden, die mit Hilfe der Sende- und Empfangssignale eine automatische Kommunikation mit dem Teilnehmer durchführt. Im Gegensatz dazu ist allerdings auch eine externe Erzeugung der Sendesignale möglich. Die Sendesignale werden der Anordnung in einem solchen Fall von außen zugeführt.

Vorteilhaft sind als Sendesignale Sprachansagen vorgesehen.

Damit ist die beschriebene Kommunikationsanordnung für Anwendungen geeignet, bei denen ein Dialogbetrieb zwischen dem Teilnehmer und der Kommunikationsanordnung erforderlich ist. Auch in den Fällen, wo der Teilnehmer während der Sprachansagen Sprachsignale an die Kommunikationsanordnung sendet, ist die Erkennung dieser Sprachsignale durch die Spracherkennungsmittel sichergestellt. Die Kommunikationsanordnung kann beispielsweise von Reisebüros zur automatischen Buchung von Reisen verwendet werden.

Eine weitere Möglichkeit zur Ausgestaltung der Erfindung liegt in der Herstellung eines Kommunikationsweges zwischen der Anordnung und. dem Teilnehmer durch ein Fernsprechnetz.

In diesem Fall wird der Kommunikationsanordnung ein Teilnehmeranschluß des Fernsprechnetzes zugeordnet.

Zur weiteren Ausgestaltung der Erfindung ist die Anordnung zur Kommunikation mit dem Teilnehmer innerhalb eines Kraftfahrzeugs vorgesehen. Dazu ist sie inbesondere in ein Autoradio integriert.

In diesem Fall erfolgt ein Austausch von Sendesignalen der Kommunikationsanordnung und Teilnehmersprachsignalen auf akustischem Weg innerhalb des Kraftfahrzeugs. Bei der Integration in ein Autoradio ist es insbesondere möglich, das Autoradio auch während des Radiobetriebs durch Sprachsignale zu steuern, z.B. während der Wiedergabe von Musik.

Ein Ausführungsbeispiel der Erfindung wird nachstehend anhand der Zeichnungen näher erläutert. Es zeigen:

Fig. 1     eine Kommunikationsanordnung mit einem Echokompensator zur Kommunikation mit einem Teilnehmer und

Fig. 2     eine Teilstruktur des Echokompensators.

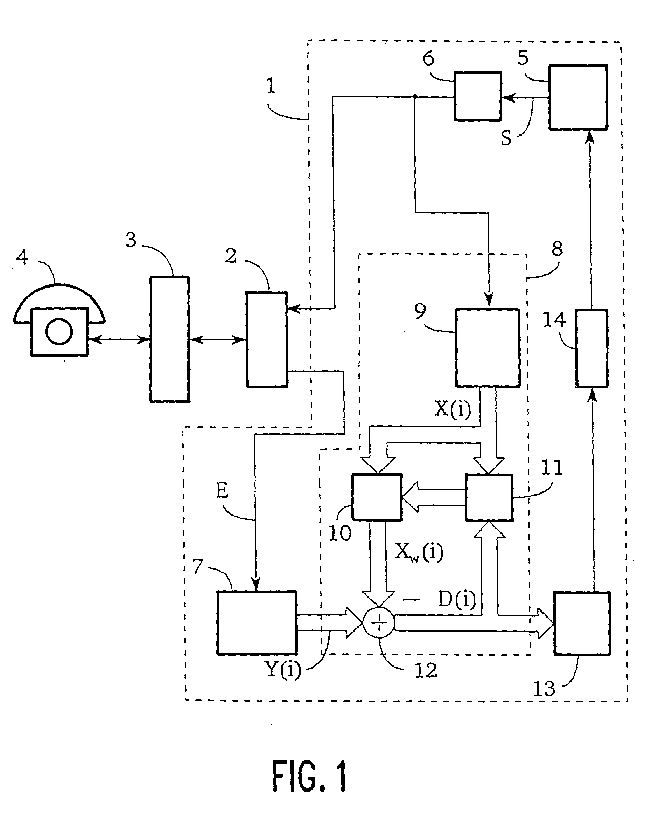

In Fig. 1 ist eine Kommunikationsanordnung 1 dargestellt, die über eine Schnittstelle 2 und einen Funktionsblock 3 mit einem Teilnehmerendgerät 4 eines Teilnehmers gekoppelt ist. Mit dem Funktionsblock 3 wird ein Kommunikationsweg zwischen der Kommunikationsanordnung 1 und dem Teilnehmerendgerät 4 des Teilnehmers hergestellt. Im vorliegenden Ausführungsbeispiel stellt der Funktionsblock 3 ein Fernsprechnetz dar. Das Teilnehmerendgerät 4 ist ein analoger oder digitaler Fernsprechapparat.

Im folgenden wird der Aufbau der Kommunikationsanordnung 1 näher beschrieben. Sie enthält eine Sprachansageeinheit 5, die zur Erzeugung von Sendesignalen S wie insbesondere Sprachansagen dient, die nach einer Zwischenspeicherung in einem Pufferspeicher 6 über die Schnittstelle 2 an den Teilnehmer mit dem Teilnehmerendgerät 4 gesendet werden, um dem Teilnehmer Informationen zu übermitteln. Auch andere Signale wie beispielsweise Signaltöne können als Sendesignale S dienen. Die Kommunikationsanordnung 1 enthält weiterhin Spektralanalysemittel 7, die eingangsseitig mit der Schnittstelle 2 gekoppelt sind. Die Spektralanalysemittel 7 werden im vorliegenden Fall durch eine Filterbank realisiert, wie sie beispielsweise in "PKI Technische Mitteilungen 1/1990, Seiten 35 bis 41" beschrieben ist. Die Spektralanalysemittel 7 dienen zur Kurzzeitspektralanalyse von Empfangssignalen E, die sich einerseits aus vom Teilnehmer erzeugten Teilnehmersprachsignalen und andererseits zeitweise zusätzlich aus Echos der Sendesignale S der Sprachansageeinheit 5 zusammensetzen. Die Teilnehmersprachsignale und die Echos überlagern sich zu den Empfangssignalen E der Spektralanalysemittel 7. Die nicht erwünschten und die Teilnehmersprachsignale störenden Echos werden dadurch verursacht, daß die Sendesignale S nicht nur in Richtung des Teilnehmers mit dem Teilnehmerendgerät 4 übertragen, sondern auch in Richtung der Spektralanalysemittel 7 reflektiert werden. Die Reflexion der Sendesignale S kann durch die Schnittstelle 2, durch den Funktionsblock 3 und auch durch das Teilnehmerendgerät 4 bewirkt werden.

Zur Kompensation der Echos enthält die Kommunikationsanordnung 1 einen Echokompensator 8, der eingangsseitig Spektralanalysemittel 9 aufweist. Die Spektralanalysemittel 9 führen eine Kurzzeitspektralanalyse der im Pufferspeicher 6 zwischengespeicherten Sendesignalabtastwerte durch. Die von den Spektralanalysemitteln 9 gelieferten Spektralwerte sind im vorliegenden Fall als Komponenten eines Spektralvektors $X(i)$ aufzufassen. Analog dazu sind die von den Spektralanalysemitteln 7 gelieferten Spektralwerte Komponenten eines Spektralvektors $Y(i)$. $i$ bezeichnet einen Zeitindex und numeriert die Zeitabschnitte durch, in die die den Spektralanalysemitteln 7 und 9 zugeführten Signale zur Kurzzeitspektralanalyse unterteilt werden.

Der Spektralvektor $X(i)$ wird einem Funktionsblock 10 zugeführt, der eine Gewichtung der Komponenten von $X(i)$ durchführt. Ein Funktionsblock 11 dient zur Adaption dieser Gewichtung. Dazu werden vom Funktionsblock 11 sowohl der Spektralvektor $X(i)$ als auch ein Differenzspektralvektor $D(i)$ ausgewertet. Der Differenzspektralvektor $D(i)$ wird durch Subtrahiermittel 12 erzeugt, die von den Komponenten des Spektralvektors $Y(i)$ die entsprechenden Komponenten des Vektors $X_w(i)$ subtrahieren, dessen Komponenten gleich den gewichteten Komponenten des Spektralvektors $X(i)$ sind. Die Komponenten des Differenzspektralvektors $D(i)$ sind somit Differenzwerte, die durch Bildung der Differenzen zwischen den Kurzzeitspektralwerten der Empfangssignale E und den geschätzten Kurzzeitspektralwerten der Echos (den Komponenten des jeweiligen Vektors $X_w(i)$) ermittelt werden.

Der Differenzspektralvektor $D(i)$ wird als Ausgangsgröße des Echokompensators 8 einer Spracherkennungseinheit 13 zugeführt. Diese führt mit den Differenzspektralvektoren $D(i)$, die weitgehend von den Echos befreite Teilnehmersprachsignale sind, einen Mustervergleich durch und ordnet ihnen zugehörige Sprachsignale zu. Diese Spracherkennung im Spektralbereich geht ebenfalls aus "PKI Technische Mitteilungen 1/1990, Seiten 35 bis 41" hervor. Ein Funktionsblock 14 steuert in Abhängigkeit von den durch die Spracherkennungseinheit 13 erkannten Sprachsignalen die Sprachansageeinheit 5 in der Weise, daß Sendesignale S erzeugt werden, die eine sinnvolle Fortsetzung oder auch einen Abbruch des Dialogs mit dem Teilnehmer bewirken.

Mit Hilfe des Echokompensators 8 wird der Einfluß der Echos auf die Spektralvektoren Y(i) soweit durch Subtraktion des Vektors $X_w(i)$ kompensiert, daß eine Spracherkennung durch die Spracherkennungseinheit 13 eine für die meisten Anwendungsfälle ausreichend geringe Fehlerrate beim Erkennen der Teilnehmersprachsignale aufweist. Gegenüber einer Echokompensation im Zeitbereich wird mit Hilfe der beschriebenen Anordnung eine Rechenaufwandsreduktion von 70 bis 90 Prozent erreicht.

Die Spektralanalysemittel 7, der Echokompensator 8 und der Pufferspeicher 6 lassen sich problemlos mit Hilfe eines einzigen Signalprozessors realisieren. Die Sprachansageeinheit 5, die Spracherkennungseinheit 13 und der Funktionsblock 14 können z.B. auf einem PC (Personal Computer) implementiert werden.

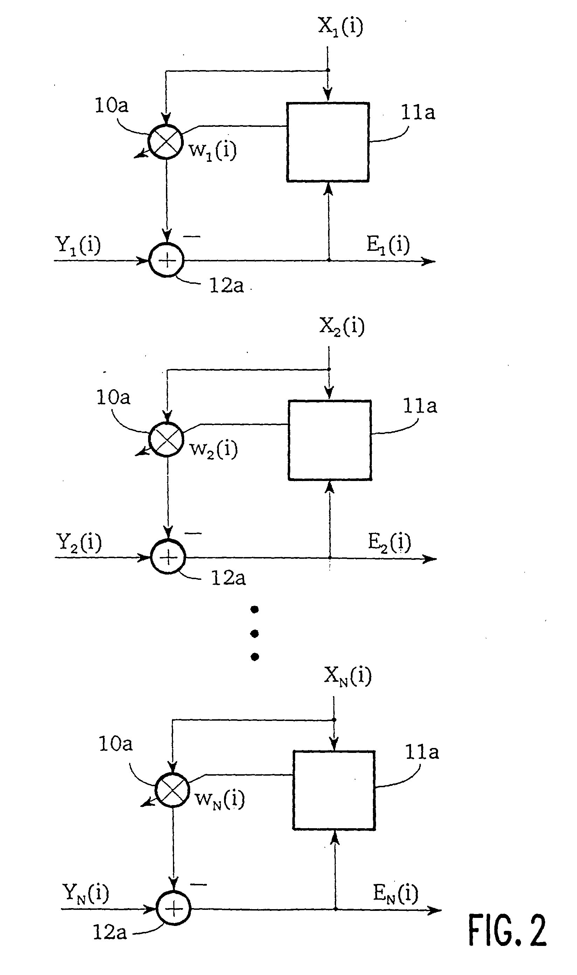

Mit Fig. 2 wird die Funktionsweise der Funktionsblöcke 10 und 11 sowie der Subtrahiermittel 12 näher erläutert. Es wird vorausgesetzt, daß die Spektralanalysemittel 7 und 9 Kurzzeitspektralanalysen der Länge N durchführen, so daß der Spektralvektor X(i) N Komponenten $X_1(i)$, $X_2(i)$, ..., $X_N(i)$, der Spektralvektor Y(i) N Komponenten $Y_1(i)$, $Y_2(i)$,..., $Y_N(i)$ und der Differenzspektralvektor D(i) N Komponenten $D_1(i)$, $D_2(i)$ und $D_N(i)$ aufweisen. Der Vektor $X_w(i)$ besteht aus N Komponenten $w_1(i)*X_1(i)$, $w_2(i)*X_2(i)$, ..., $w_N(i)*X_N(i)$, die jeweils durch Multiplizierer 10-1, 10-2, ..., 10-N des Funktionsblockes 10 dadurch gebildet werden, daß Gewichtsfaktoren $w_1(i)$, $w_2(i)$, ..., $w_N(i)$ jeweils mit den Komponenten des Spektralvektors X(i) multipliziert werden. Die Komponenten $D_1(i)$ bis $D_N(i)$ des Differenzspektralvektors D(i) werden durch die Differenzen $Y_1(i)-w_1(i)*X_1(i)$, ..., $Y_N(i)-w_N(i)*X_N(i)$ mit Hilfe der aus Subtrahierern 12-1, 12-2, ..., 12-N bestehenden Subtrahiermittel 12 gebildet. gebildet. Die Einstellung der Gewichtsfaktoren $w_1(i)$ bis $w_N(i)$ erfolgt durch die Funktionseinheiten 11-1, 11-2, ..., 11-N, die durch den Funktionsblock 11 zusammengefaßt sind. Mit ihnen kann insbesondere ein LMS-Algorithums ("Least Mean Square") durchgeführt werden.

Eine vorteilhafte Berechnungsvorschrift für die Gewichtsfaktoren lautet somit:

$$w_j(i) = w_j(i-1) + \mu*D_j(i-1)*X_j(i-1),\ j = 1,2, ..., N.$$

$\mu$ stellt hier eine Adaptionskonstante dar. Wird diese Konstante gleich Null gesetzt, ist dies gleichbedeutend damit, daß keine Adaption der Gewichtsfaktoren $w_j(i)$ erfolgt. Anstelle der einfachen Multiplikation der Komponenten $X_j(i)$ mit den Gewichtsfaktoren $w_j(i)$ kann zur Verbesserung der Echokompensation auch ein Einsatz von Filtern höherer Ordnung vorgesehen werden.

Die durch die Figuren 1 und 2 beschriebene Kommunikationsanordnung 1 kann insbesondere auch zur Kommunikation mit einem Teilnehmer innerhalb eines Kraftfahrzeugs erfolgen. Dazu ist die Kommunikationsanordnung beispielsweise in ein Autoradio integriert. Der Teilnehmer liefert in diesem Fall auf akustischem Wege Teilnehmersprachsignale an die Schnittstelle 2, um das Autoradio zu steuern. Der Sprachansageeinheit 5 entspricht in diesem Beispiel die Musiksignale erzeugende Einheit des Autoradios. Der Echokompensator 8 dient hier zur Kompensation von Echos der Musiksignale, so daß auch während des Aussendens von Musik eine Steuerung des Autoradios durch Sprachsignale des Teilnehmers erfolgen kann.

**Patentansprüche**

1. Anordnung zur Kommunikation mit einem Teilnehmer (4), die

   - Spektralanalysemittel (7) zur Bildung von Kurzzeitspektralwerten (Y(i)) von Empfangssignalen (E), die zeitweise von Echos von dem Teilnehmer (4) übermittelten Sendesignalen (S) überlagerte Teilnehmersprachsignale sind,
   - Echokompensationsmittel (8) zur Schätzung von Kurzzeitspektralwerten der Echos ($X_W(i)$) und zur Bildung von Differenzwerten (D(i)) zwischen den Kurzzeitspektralwerten (Y(i)) der Empfangssignale (E) und den geschätzten Kurzzeitspektralwerten ($X_W(i)$) der Echos und
   - Spracherkennungsmittel (13) zur Auswertung der Differenzwerte (D(i))

   enthält.

2. Anordnung nach Anspruch 1,
   **dadurch gekennzeichnet,**
   **daß** die Echokompensationsmittel (8)

   - zur Bildung von Kurzzeitspektralwerten (X(i)) der Sendesignale (S) und
   - zur adaptiven Gewichtung (10, 11) dieser Kurzzeitspektralwerte (X(i)) zur Abschätzung der Echos

   vorgesehen sind.

3. Anordnung nach Anspruch 2,
   **dadurch gekennzeichnet,**
   **daß** zur adaptiven Gewichtung (10, 11) der Kurzzeitspektralwerte (X(i)) der Sendesignale (S) ein LMS-Algorithmus dient.

4. Anordnung nach einem der Ansprüche 1 bis 3,
   **dadurch gekennzeichnet,**

**daß** Mittel (5) zur Erzeugung der Sendesignale (S) in die Anordnung (1) integriert sind.

**5.** Anordnung nach einem der Ansprüche 1 bis 4, **dadurch gekennzeichnet,** **daß** die Sendesignale (S) Sprachansagen sind.

**6.** Anordnung nach einem der Ansprüche 1 bis 5, **dadurch gekennzeichnet,** **daß** zur Herstellung eines Kommunikationsweges zwischen der Anordnung (1) und dem Teilnehmer (4) ein Fernsprechnetz (3) dient.

**7.** Anordnung nach einem der Ansprüche 1 bis 5, **dadurch gekennzeichnet,** **daß** die Anordnung (1) zur Kommunikation mit dem Teilnehmer innerhalb eines Kraftfahrzeugs vorgesehen ist.

**8.** Anordnung nach Anspruch 7, **dadurch gekennzeichnet,** **daß** die Anordnung (1) in ein Autoradio integriert ist.

## Claims

**1.** An rrangement for communication with a subscriber (4), comprising

- spectral analysis means (7) for producing short-time spectral values ($Y(i)$) of received signals (E) which signals are at times subscriber's speech signals superimposed by echoes of transmission signals (S) transmitted to the subscriber (4),
- echo cancelling means (8) for estimating short-time spectral values of the echoes ($X_w(i)$) and for producing difference values ($D(i)$) between the short-time spectral values ($Y(i)$) of the received signals (E) and the estimated short-time spectral values ($X_w(i)$) of the echoes, and
- speech recognition means (13) for evaluating the difference values ($D(i)$).

**2.** An arrangement as claimed in Claim 1, **characterized in that** the echo cancelling means (8) are provided

- for producing short-time spectral values ($X(i)$) of the transmission signals (S) and
- for adaptively weighting (10, 11) these short-time spectral values ($X(i)$) to estimate the echoes.

**3.** An arrangement as claimed in Claim 2, **characterized in that** an LMS algorithm is used for adaptively weighting (10, 11) the short-time spectral values ($X(i)$) of the transmission signals (S).

**4.** An arrangement as claimed in one of the Claims 1 to 3, **characterized in that** generating means (5) for generating the transmission signals (S) are integrated with the arrangement (1).

**5.** An arrangement as claimed in one of the Claims 1 to 4, **characterized in that** the transmission signals (S) are speech announcements.

**6.** An arrangement as claimed in one of the Claims 1 to 5, **characterized in that** a telephone network (3) is used for establishing a communication path between the arrangement (1) and the subscriber (4).

**7.** An arrangement as claimed in one of the Claims 1 to 5, **characterized in that** the arrangement (1) is provided for communicating with the subscriber inside a motor vehicle.

**8.** An arrangement as claimed in Claim 7, **characterized in that** the arrangement (1) is integrated into a car radio.

## Revendications

**1.** Dispositif de communication avec un opérateur (4) qui contient:

- des moyens d'analyse spectrale (7) pour la formation de valeurs spectrales de courte durée ($Y(i)$) à partir de signaux de réception (E) qui sont des signaux de parole de l'opérateur superposés temporairement par les échos des signaux de transmission (S) transmis par l'opérateur (4),
- des moyens de compensation des échos (8) pour l'estimation des valeurs spectrales de courte durée des échos ($X_w(i)$) et pour la formation de valeurs différentielles ($D(i)$) entre les valeurs spectrales de courte durée ($Y(i)$) des signaux de réception (E) et les valeurs spectrales de courte durée estimées ($X_W(i)$) des échos et
- des moyens de reconnaissance vocale (13) pour l'évaluation des valeurs différentielles ($D(i)$).

**2.** Dispositif selon la revendication 1, **caractérisé en ce** **que** les moyens d'annulation de l'écho (8) sont prévus:

- pour la formation de valeurs spectrales de courte durée ($X(i)$) des signaux de transmission (S) et
- pour la pondération adaptative (10, 11) de ces valeurs spectrales de courte durée ($X(i)$) pour l'évaluation des échos.

3. Dispositif selon la revendication 2,
   **caractérisé en ce**
   **qu'**un algorithme LMS sert à la pondération adaptative (10, 11) des valeurs spectrales de courte durée (X(i)) des signaux de transmission (S).

4. Dispositif selon l'une des revendications 1 à 3,
   **caractérisé en ce**
   **que** des moyens (5) sont intégrés pour la production des signaux de transmission (S) dans le dispositif (1).

5. Dispositif selon l'une des revendications 1 à 4,
   **caractérisé en ce**
   **que** les signaux de transmission (S) sont des annonces vocales.

6. Dispositif selon l'une des revendications 1 à 5,
   **caractérisé en ce**
   **qu'**un réseau téléphonique (3) sert à l'établissement d'une voie de communication entre le dispositif (1) et l'opérateur (4).

7. Dispositif selon l'une des revendications 1 à 5,
   **caractérisé en ce**
   **que** le dispositif (1) est prévu pour la communication avec l'opérateur à l'intérieur d'un véhicule automobile.

8. Dispositif selon la revendication 7,
   **caractérisé en ce**
   **que** le dispositif (1) est intégré dans un autoradio.

FIG. 1

FIG. 2